# EUROPÄISCHE PATENTSCHRIFT

(11) **EP 1 118 017 B1**
(45) Veröffentlichungstag und Bekanntmachung des Hinweises auf die Patenterteilung: **29.12.2004**
(21) Anmeldenummer: 99907608.6
(22) Anmeldetag: 08.03.1999
(51) Int. Cl.: G01S 7/06, G01S 7/295

(54) **VERFAHREN UND VORRICHTUNG ZUR ERZEUGUNG EINER NACHLEUCHTSCHLEPPE**
METHOD AND DEVICE FOR PRODUCING A PULSE TRAIL
PROCEDE ET DISPOSITIF PERMETTANT DE PRODUIRE UNE TRAINEE D'IMPULSION

(30) Priorität: 29.09.1998 DE 19844620
(43) Veröffentlichungstag der Anmeldung: 25.07.2001
(73) Patentinhaber: SAM Electronics GmbH, 22763 Hamburg (DE)
(72) Erfinder: FRERICHS, Wilfried, D-28197 Bremen (DE); STÖCKIGT, Peter, D-28844 Weyhe-Leeste (DE)
(74) Vertreter: Rohnke, Christian, Dr.
(86) Internationale Anmeldenummer: PCT/EP1999/001475
(87) Internationale Veröffentlichungsnummer: WO 2000/019232

(56) Entgegenhaltungen:
- DE-A- 2 924 176
- US-A- 4 829 308
- US-A- 5 459 472

## Beschreibung

Die Erfindung betrifft ein Verfahren und eine Vorrichtung zur Erzeugung einer Nachleuchtschleppe zu mindestens einem in einem Radarbild eines Radargeräts fortlaufend in seiner jeweils aktuellen Position dargestellten Ziel gemäß den Oberbegriffen der Ansprüche 1 und 7.

Derartige auf dem Radarschirm in Zuordnung zu einzelnen Zielen erzeugte Nachleuchtschleppen beschreiben die Spuren von georteten Zielen auf dem Radarbild, aus denen ein Beobachter das Bewegungsverhalten der Ziele unterscheiden sowie aus den Bewegungsrichtungen gegebene Kollisionsgefahren erkennen und durch geeignete Eigenmanöver beseitigen kann.

Bei einem bekannten Verfahren dieser Art (DE 29 24 176 C2) werden die Radarechos der aktuellen Panoramaabtastung und von mehreren vorhergehenden Panoramaabtastungen nach Speicherung in einem einzigen Bildspeicher auf dem Bildschirm des Radargerätes angezeigt. Als Bildspeicher wird ein in x,y-Koordinaten orientierter Schreib-Lese-Speicher verwendet, bei dem das Speichern durch Ablegen der Intensitäten der in aufeinanderfolgenden Abtastungen des Panoramas jeweils aktuell empfangenen Radarechos mit den ihren Ortskoordinaten entsprechenden Adressen des Speichers vorgenommen wird. Die aus vorhergehenden Abtastungen gewonnenen Intensitäten bleiben dabei erhalten. Der Bildinhalt des Bildspeichers wird unabhängig von der zeitlichen Reihenfolge des Empfangs der Radarechos ausgelesen und auf dem Radarbild dargestellt. Damit erscheinen die bei aufeinanderfolgenden Panoramaabtastungen gespeicherten Intensitäten auf dem Bildschirm einandergereiht und beschreiben die Spuren oder die Nachleuchtschleppen der Ziele.

In einer weiteren Ausgestaltung des bekannten Verfahrens werden die abgespeicherten Intensitäten nach einer vorgebbaren Anzahl von Panoramaabtastungen um ein oder mehr Imkremente reduziert, wodurch die vorhergehende Zielpositionen mit einer mit dem Alter abnehmenden Intensität auf dem Bildschirm dargestellt werden. Die Länge der Nachleuchtschleppen ist damit nicht nur von der Zielgeschwindigkeit, sondern auch von der Geschwindigkeit abhängig, mit der eine vollständige Panoramaabtastung erfolgt, und läßt damit nur bei konstanter Umlaufgeschwindigkeit der Radarantenne eine Zuordnung des Zeitintervalls, für das die Nachleuchtschleppe dargestellt wird, zu der Länge der Nachleuchtschleppe zu. Wird die Umlaufgeschwindigkeit geändert, muß das Zeitintervall neu definiert werden.

Ein weiteres derartiges Verfahren ist aus der US-A-4 829 308 bekannt.

Der Erfindung liegt die Aufgabe zugrunde, ein Verfahren der eingangs genannten Art dahingehend zu verbessern, daß die Nachleuchtschleppen mit geringem Aufwand ohne Überfrachtung des Radarbildes bei einer Mehrzahl von gleichzeitig dargestellten Zielen in einer für den Betrachter gut sichtbaren Weise im Radarbild erscheinen.

Die Aufgabe ist erfindungsgemäß durch die Merkmale im Patentanspruch 1 gelöst.

Das erfindungsgemäße Verfahren hat den Vorteil, daß es sich mit Standard-Grafikkarten in einem Standard-Bildschirm- oder Videogerät ausführen läßt und dadurch praktisch ohne Zusatzaufwand implementiert werden kann. Die auf dem Bildschirm sichtbaren Nachleuchtschleppen sind sehr anschaulich und überfrachten oder überladen selbst bei einer Vielzahl von auf dem Radarbild erscheinenden Zielen nicht das Radarbild, da sie durch die mit zunehmendem Alter vermehrte Bildpunktausdünnung in ihrer Leuchtkraft zu dem von der aktuellen Zielposition abgekehrten Ende der Nachleuchtschleppe hin nachlassen.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Das erfindungsgemäße Verfahren läßt sich in besonders vorteilhafter Weise dadurch realisieren, daß gemäß einer bevorzugten Ausführungsform des Verfahrens die Amplituden der von dem Radargerät empfangenen Radarechos in einem Radarvideospeicher, dessen Speicherzellen in x,y-Koordinaten orientiert sind, abgespeichert werden, daß der Speicherinhalt des Radarvideospeichers Speicherzelle für Speicherzelle in mindestens einen Schleppenspeicher, dessen Speicherzellen in x,y-Koordinaten orientiert sind, als 1 Bit-Information eingeschrieben wird, soweit der Speicherinhalt der einzelnen Speicherzellen einen ersten Vorgabewert übersteigt, daß der Speicherinhalt des Schleppenspeichers nach einem z.B. pseudostatistischen Verfahren zur Bildpunktausdünnung fortlaufend gelöscht wird, daß in einen Bildwiederholspeicher, dessen Speicherzellen in x,y-Koordinaten orientiert sind, zunächst der Speicherinhalt des Schleppenspeichers eingeschrieben wird und zeitlich darauffolgend der Speicherinhalt des Radarvideospeichers eingeschrieben wird, soweit die Speicherinhalte der einzelnen Speicherzellen des Radarvideospeichers einen zweiten Vorgabewert übersteigen, und daß der Speicherinhalt des Bildwiederholspeichers fortlaufend auf dem in x,y-Koordinaten orientierten Radarschirm des Radargerätes als Bildpunkt pro Speicherzelle dargestellt wird.

Die Speicherung der Nachleuchtschleppen in einem besonderen Schleppenspeicher ermöglicht nicht nur die Bildpunktausdünnung in einer besonders einfachen Weise, sondern ermöglicht auch problemlos die Umschaltung der Darstellungsart true-motion auf die Darstellungsarten relative-motion sowie relativ-motion true trails (Centerdisplay), bei denen der eigene Standort, also das das Radargerät tragende Eigenschiff, im Radarbild, vorzugsweise in dessen Mitte festliegt, und umgekehrt, da lediglich der Speicherinhalt des Schleppenspeichers entsprechend der Eigenschiffsbewegung zyklisch verschoben oder die Adressierung der Speicherzellen des Schleppenspeichers entsprechend der Eigenschiffsbewegung zyklisch geändert werden muß. Bei Verwendung von zwei Schleppenspeichern ist mit der Umschaltung kein Verlust der Nachleuchtschleppen verbunden, so daß anders als bei den bekannten Radargeräten keine Wartezeit, die immerhin mehere Antennenumläufe beträgt, in Kauf genommen werden muß, bis die Nachleuchtschleppen in der jeweils gewählten Darstellungsart wieder auf dem Radarbild erscheinen.

Das Vorsehen der zusätzlichen Speicher mit gleich großer Speichergröße wirkt sich kaum nennenswert auf die Fertigungskosten eines nach dem Verfahren arbeitenden Bildschirmgeräts aus, da Speicherkarten der erforderlichen Größe extrem preiswert sind. Darüber hinaus läßt sich mittels des Schleppenspeichers eine Farbcodierung einfach erreichen, so daß die Nachleuchtschleppen noch zusätzlich andersfarbig dargestellt werden können.

Die Erfindung ist anhand eines in der Zeichnung dargestellten Ausführungsbeispiels im folgenden näher beschrieben. Es zeigen in jeweils schematischer Darstellung:
- Fig. 1: ein Blockschaltbild eines Radargerätes,
- Fig. 2: eine vergrößerte Darstellung des auf dem Bildschirm des Radargerätes in Fig. 1 zu sehenden Radarbilds,
- Fig. 3: eine Darstellung des Speicherinhalts eines Schleppenspeichers im Radargerät gemäß Fig. 1 zu drei aufeinanderfolgenden Zeitpunkten.

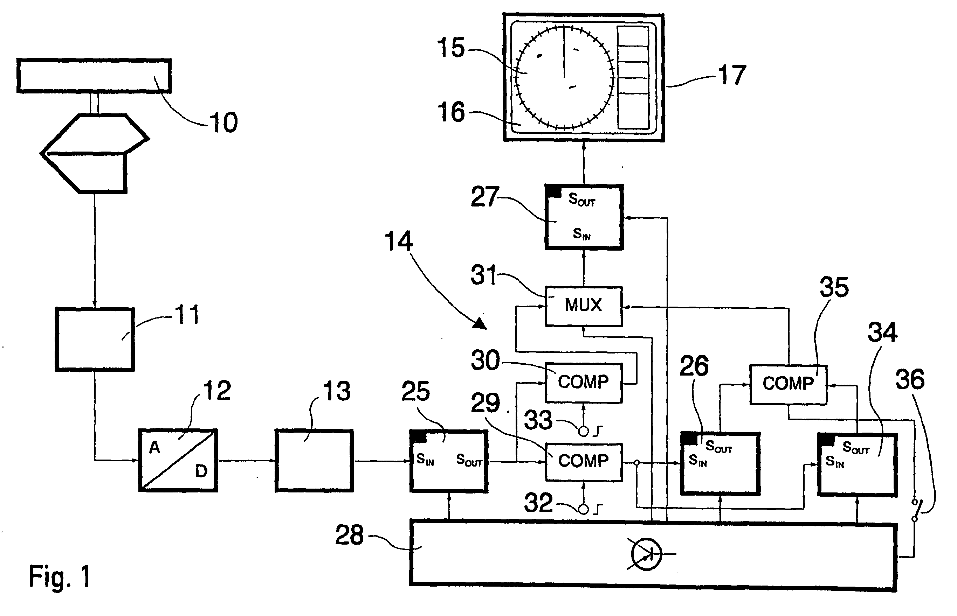

Das in Fig. 1 als Blockschaltbild_dargestellte Radargerät weist in bekannter Weise eine rotierende Radarantenne 10 auf, mit welcher Ziele nach dem Prinzip der Rückstrahlortung erfaßt werden. Anstelle einer mechanischen Drehung der Antenne 10 kann auch eine elektronische Drehung der Antenne erfolgen. Jedes mit der Antenne 10 empfangene Rückstrahlortungssignal oder Radarecho wird der Empfangseinrichtung einer Sende- und Empfangseinrichtung 11 zugeführt, dort entsprechend aufbereitet und in einem Analog-Digital-Wandler 12 in Digitalsignale umgesetzt. Die in 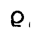 , ϕ-Koordinaten (Entfernung und Peilung) vorliegenden Digitalsignale werden durch einen Koordinatentransformator 13 in ein x,y-Koordinatensystem transformiert und einem Bildgenerator 14 zugeführt, der die Position der durch die Radarechos gekennzeichneten Ziele in einem Radarbild 15 darstellte das auf dem Radarschirm 16 eines Bildschirm- oder Videogeräts 17 erscheint.

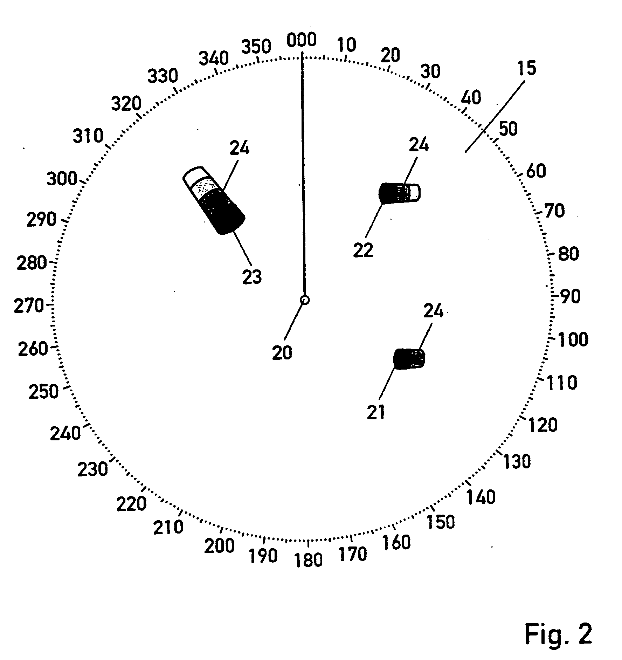

In Fig. 2 ist für ein willkürlich gewähltes Szenario ein Radarbild 15 vergrößert dargestellt. Das Radarbild 15 ist im sog. relative-motion-Modus dargestellt, d.h. die Position der erfaßten Ziele sind in einem Bezugssystem dargestellt, das auf das Eigenschiff bezogen ist. Daher befindet sich das Eigenschiff, in Fig. 2 mit 20 bezeichnet, auf dem Radarbild 15 immer auf einem festen Punkt, hier in der Mitte des Radarbilds 15. In dem Radarbild 15 der Fig. 2 sind von dem Radargerät drei verschiedene Ziele 21 bis 23 erfaßt, wobei einerseits die jeweils aktuelle Position der Ziele 21 bis 23, sowie andererseits zeitlich vorhergehende Zielpositionen der Ziele 21 bis 23 jeweils als eine den Zeitrang kennzeichnende Nachleuchtschleppe 24 dargestellt werden, so daß anhand dieser Nachleuchtschleppen 24 die mit der Zeit sich verändernden Positionen der Ziele 21 bis 23 überblickt werden können. Die Darstellung der Nachleuchtschleppen 24 bei den einzelnen Zielen 21 bis 23 erfolgt in der Weise, daß die aktuelle Zielposition der Ziele 21 bis 23 durch eine Anzahl von Bildpunkten sichtbar gemacht wird, die eine zusammenhängende Fläche in dem Radarbild 15 abdecken, und die zeitlich vorhergehenden Zielpositionen durch eine mit dem Zeitrang der jeweiligen Zielposition zunehmende Bildpunktausdünnung in der Fläche dargestellt werden, so daß die Zahl der innerhalb der Fläche aktivierten Bildpunkte mit zunehmendem Alter der Zielposition abnimmt. Dies ist in dem Radarbild 15 der Fig. 2 dadurch verdeutlicht, daß die aktuellen Zielpositionen jeweils mit einer schwarzen Fläche belegt sind, die bei dem vorhergehenden älteren Zielpositionen punktweise zunehmend unterbrochen wird. Je älter die dargestellte Zielposition ist, desto größer sind infolge der Bildpunktausdünnungen die Aussparungen in der geschlossenen Fläche, so daß für die vorhergehenden Zielpositionen ein Punktmuster entsteht, das mit zunehmendem Alter der jeweiligen Zielposition immer lichter wird.

Zur Erzeugung des Radarbilds 15 mit den Zielen 21 bis 23 und den jedem Ziel 21 bis 23 zugeordneten Nachleuchtschleppen 24 weist der Bildgenerator 14 einen Radarvideospeicher 25, einen Schleppenspeicher 26, einen Bildwiederholspeicher 27 sowie eine das Ein- und Auslesen der Speicher 25 bis 27 steuernde Steuereinheit 28 auf. Die drei Speicher 25 bis 27 sind jeweils in x,y-Koordinaten orientiert und weisen eine gleiche Speichergröße bezüglich des Koordinatenbereichs auf. Der Radarvideospeicher 25 ist eingangsseitig an dem Ausgang des Koordinatentransformators 13 angeschlossen und ausgangsseitig mit je einer Vergleichsschaltung oder einem Komparator 29 und 30 verbunden. Der Schleppenspeicher 26 ist eingangsseitig an dem Ausgang des ersten Komparators 29 und ausgangsseitig über einen zweiten Multiplexer 35, dessen Funktion noch später erläutert wird, an einem Eingang des Multiplexers 31 angeschlossen, an dessen anderem Eingang der Ausgang des zweiten Komparators 30 liegt. Der Speichereingang des Bildwiederholspeichers 27 liegt an dem Ausgang des Multiplexers 31 und der Speicherausgang des Bildwiederholspeichers 27 an dem Videogerät 17. An den ersten Komparator 29 ist eine erste Komparatorschwelle 32 und an den zweiten Komparator 30 eine zweite Komparatorschwelle 33 gelegt, wobei die zweite Komparatorschwelle 33 vorzugsweise zu Null gemacht wird. Der erste Komparator 29 ist so ausgebildet, daß an seinem Ausgang eine 1 Bit-Information ansteht, wenn ein an seinem Eingang liegender Wert, hier der Speicherwert des Radarvideospeichers 25, die erste Komparatorschwelle 32 übersteigt. Der zweite Komparator 30 ist so ausgebildet, daß an seinem mit dem Multiplexer 31 verbundenen Ausgang ein an seinem Eingang anstehender Wert, hier der Speicherwert des Radarvideospeichers 25 liegt, wenn dieser größer ist als die zweite Komparatorschwelle 33. Der von der Steuereinheit 28 gesteuerte Multiplexer 31, der lediglich die Funktion einer Datenweiche hat, schaltet seinen Ausgang periodisch und zeitlich nacheinander zunächst auf seinen mit dem Schleppenspeicher 26 und dann auf seinen mit dem Radarvideospeicher 25 verbundenen Eingang.

Der so aufgebaute Bildgenerator 14 arbeitet nach folgendem Verfahren:

Von den die mit der Antenne 10 empfangenen Radarechos repräsentierenden, digitalisierten und signaltechnisch aufbereiteten elektrischen Empfangssignale der Sende- und Empfangseinrichtung 11, den sog. Videosignalen oder -daten, werden die Amplituden entsprechend ihren zugehörigen x,y-Koordinaten in die entsprechend adressierten Speicherzellen des Radarvideospeichers 25 eingespeichert. Der Speicherhinhalt des Radarvideospeichers 25 wird zyklisch ausgelesen und durch den ersten Komparator 29 Speicherzelle für Speicherzelle in den Schleppenspeicher 26 als 1 Bit-Information eingeschrieben, wenn der Speicherinhalt der einzelnen Speicherzelle die erste Komparatorschwelle 32 übersteigt. Damit werden zyklisch alle Speicherzellen des Radarvideospeichers 25, in denen die gespeicherte Amplitude größer ist als die erste Komparatorschwelle, als 1 Bit-Information in den Schleppenspeicher 26 kopiert. Für eine Farbdarstellung der Nachleuchtschleppen auf dem Radarbild 15 wird beim Einschreiben zudem die 1Bit-Information so codiert, daß ihre Codierung von der Codierung des Speicherinhalts des Radarvideospeichers 25 deutlich unterscheidbar ist. Beim Kopier- bzw. Einschreibvorgang wird der Inhalt des Schleppenspeichers 26 nicht gelöscht, sondern nur überschrieben. Ist die Amplitude in einer Speicherzelle des Radarvideospeichers 25 kleiner als die erste Komparatorschwelle 32, so erfolgt keine Belegung der gleich adressierten Speicherzelle im Schleppenspeicher 26. Mit einem Verfahren zur Bildpunktausdünnung, z.B. einem pseudostatistischem Verfahren, wird der Speicherinhalt der Speicherzellen des Schleppenspeichers 26 ständig gelöscht. Die Löschfrequenz ist dabei unabhängig von der Einschreibfrequenz in den Schleppenspeicher 26, wobei durch Verändern der Löschfrequenz die Länge der erzeugten Nachleuchtschleppe unabhängig von der Umlaufgeschwindigkeit der Radarantenne gewählt werden kann.

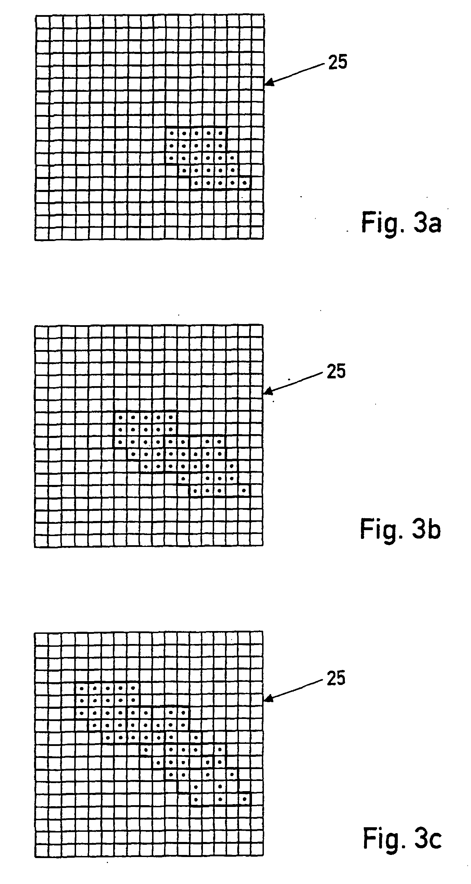

In Fig. 3 ist der Aufbau einer solchen Naehleuchtschleppe 24 in drei Phasen dargestellt. Fig. 3a zeigt die Schleppe nach der Initiierungsphase als Kopie aus dem Radarvideospeicher 25. In Fig. 3b hat sich das Ziel ein Stück weiter bewegt. Das Schleppenbild an der aktuellen Position ist noch geschlossen, während das Schleppenbild an der Position aus der Initiierungsphase durch das angewandte Löschverfahren um ca. 20% ausgedünnt wurde. In Fig. 3c hat sich das Ziel wiederum ein Stück weiter bewegt, so daß nunmehr drei Gebiete zu erkennen sind. Im vordersten Gebiet der Schleppe, also der unmittelbaren aktuellen Zielposition, ist die Schleppe geschlossen. Im mittleren Bereich der Schleppe ist der Speicherinhalt um ca. 20% und im hinteren Bereich um ca. 40% ausgedünnt.

Die Speicherinhalte von Schleppenspeicher 26 und Radarvideospeicher 25 werden zyklisch und zeitlich in der genannten Reihenfolge nacheinander in den Bildwiederholspeicher 27 kopiert, wobei durch den zweiten Komparator 30 eine solche Sortierung vorgenommen wird, daß der Speicherinhalt des Radarvideospeichers 25 nur eingeschrieben wird und ggf. zuvor aus dem Schleppenspeicher 26 eingeschriebene Bildpunkte überschreibt, wenn die Speicherinhalte der einzelnen Speicherzellen des Radarvideospeichers 25 den zweiten Vorgabewert übersteigen. Der von der Steuereinheit 28 gesteuerte Multiplexer 31 verbindet dabei zeitlich richtig den jeweiligen Ausgang von Schleppenspeicher 26 und Radarvideospeicher 25 mit dem Speichereingang des Bildwiederholspeichers 27. Der nunmehr in den Bildwiederholspeicher 27 in dieser Weise kopierte Speicherinhalt ist ein Abbild des auf dem Radarschirm 16 momentan darzustellenden Radarbilds 15, das zyklisch erneuert und fortlaufend auf dem Radarschirm 16 dargestellt wird.

Auf den Multiplexer 31 kann verzichtet und die Ausgänge von Schleppenspeicher 26 und Komparator 30 direkt mit dem Speichereingang des Bildwiederholspeichers 27 verbunden werden, wenn in der Steuereinheit 28 eine entsprechende Steuerroutine vorgesehen wird, die das Auslesen von Schleppenspeicher 26 und Radarvideospeicher 25 in der vorstehend beschriebenen Weise bewirkt.

Wie bereits erwähnt, erfolgt die Bilddarstellung in relativ-motion. Soll sie in relativ-motion true trails vorgenommen werden, so muß der Inhalt des Schlepperspeichers 26 zyklisch verschoben oder eine die Eigenbewegung des das Radargerät tragenden Schiffes kompensierende Umadressierung der Speicherzellen des Schleppenspeichers 26 vorgenommen werden.

Um beim Umschalten zwischen den Darstellungsarten, die von dem Bediener willkürlich vorgenommen werden kann, den Verlust der Nachleuchtschleppen zu vermeiden, die nach einem Umschaltvorgang erst nach einer längeren Zeit, die mehrere Antennenumläufe beträgt, wieder aufgebaut werden, ist ein zweiter Schleppenspeicher 34 vorgesehen, der mit seinem Speichereingang ebenfalls an dem Ausgang des ersten Komparators 29 angeschlossen ist. Damit werden die 1 Bit-Informationen gleichzeitig in beide Schleppenspeicher 36, 34 kopiert, wobei jedoch durch die Steuereinheit 28 beim Einschreiben der 1 Bit-Informationen in den zweiten Schleppenspeicher 36 eine für die true-motion Darstellung wichtige Umadressierung der Speicherzellen in der Weise durchgeführt wird, daß die Eigenschiffsbewegung räumlich im x,y-Koordinatensystem kompensiert wird. Damit erfolgt der Schleppenaufbau im ersten Schleppenspeicher 26 in relativ-motion und in dem zweiten Schleppenspeicher 34 in true-motion und zwar zeitgleich. Der zweite Schleppenspeicher 34 wird von der Steuereinheit 28 parallel in gleicher Weise bearbeitet, so daß sein Speicherinhalt laufend nach dem gleichen Verfahren fortlaufend gelöscht wird und die beschriebene Bildpunktausdünnung in dem die Nachleuchtschleppen 24 darstellenden Speicherinhalt erfolgt. Beim Umschalten der Darstellungsart auf dem Radarschirm 16 kann nunmehr wahlweise auf den ersten Schleppenspeicher 26 und auf den zweiten Schleppenspeicher 34 zurückgegriffen werden, und damit können die Nachleuchtschleppen 24 in relativ-motion oder true-motion auf dem Radarschirm 16 dargestellt werden.

Zum wahlweisen Zugriff auf die beiden Speicherausgänge der Schleppenspeicher 26 und 34 sind diese an den beiden Eingängen eines zweiten Multiplexers 35 angeschlossen, dessen Ausgang an dem einen Eingang des ersten Multiplexers 31 liegt. Der zweite Multiplexer 35 wird mittels eines von Hand zu bedienenden Umschalters 36 gesteuert. Nimmt dabei der Umschalter 36 die in Fig. 1 schematisch angedeutete Schaltposition ein, so ist im Multiplexer 35 dessen Ausgang mit dem an dem ersten Schleppenspeicher 26 liegenden Eingang verbunden. Wird der Umschalter 36 geschlossen, so liegt der Ausgang des Multiplexers 35 auf dem mit dem zweiten Schleppenspeicher 34 verbundenen Eingang.

## Patentansprüche

1. Verfahren zur Erzeugung einer Nachleuchtschleppe zu mindestens einem in einem Radarbild (15) eines Radargerätes fortlaufend in seiner jeweils aktuellen Position dargestellten Ziel (21 bis 23), bei dem die aktuelle Zielposition durch eine Anzahl von eine zusammenhängende Fläche in dem Radarbild (15) abdeckenden Bildpunkten sichtbar gemacht wird und die zeitlich vorhergehenden Zielpositionen durch eine mit dem Zeitrang der jeweiligen Zielposition zunehmende Bildpunktausdünnung in der Fläche dargestellt werden, bei dem die Amplituden der von dem Radargerät empfangenen Radarechos in einem Radarvideospeicher (25), dessen Speicherzellen in x,y-Koordinaten orientiert sind, abgespeichert werden, und bei dem der Speicherinhalt des Radarvideospeichers (25) Speicherzelle für Speicherzelle in mindestens einen Schleppenspeicher (26), dessen Speicherzelle in x,y-Koordinaten orientiert sind, als 1-Bit-Information eingeschrieben wird, **dadurch gekennzeichnet, daß** soweit der Speicherinhalt der einzelnen Speicherzellen einen ersten Vorgabewert übersteigt, der Speicherinhalt des Schleppenspeichers (26) mit einem Verfahren zur Bildpunktausdünnung, z.B. einem pseudostaistischen Verfahren, fortlaufend gelöscht wird, daß in einen Bildwiederholspeicher (27), dessen Speicherzellen in x,y-Koordinaten orientiert sind, zeitlich nacheinander zuerst der Speicherinhalt des Schleppenspeichers (26) eingeschrieben wird und dann der Speicherinhalt des Radarvideospeichers (25) in dem Umfang eingeschrieben wird, als die Speicherinhalte der einzelnen Speicherzellen des Radarvideospeichers (25) einen zweiten Vorgabewert übersteigen, und daß der Speicherinhalt des Bildwiederholspeichers (27) fortlaufend auf dem in x,y-Koordinaten orientierten Radarbild (15) als Bildpunkt pro Speicherzelle dargestellt wird.

2. Verfahren nach Anspruch 1, **dadurch gekennzeichnet, daß** der zweite Vorgabewert auf Null gesetzt wird.

3. Verfahren nach Anspruch 1 oder 2, **dadurch gekennzeichnet, daß** das Löschverfahren im Schleppenspeicher (26) mit einer von der Ein-/Auslesefrequenz des Schleppenspeichers (26) unabhängigen Frequenz durchgeführt wird.

4. Verfahren nach einem der Ansprüche 1 - 3, **dadurch gekennzeichnet, daß** die 1 Bit-Informationen spätestens beim Einschreiben in den Bildwiederholspeicher (27) in der Weise codiert werden, daß ihre Codierung sich von der Codierung des Speicherinhalts des Radarvideospeichers (25) signifikant unterscheidet.

5. Verfahren nach Anspruch 4, **dadurch gekennzeichnet, daß** die Codierung beim Einschreiben in den Schleppenspeicher (26) durchgeführt wird.

6. Verfahren nach einem der Ansprüche 1 - 5, **dadurch gekennzeichnet, daß** das Einschreiben der 1 Bit-Informationen gleichzeitig in zwei Schleppenspeicher (26, 34) erfolgt, daß beim Einschreiben der 1 Bit-Informationen in den einen Schleppenspeicher (34) oder beim Auslesen der 1 Bit-Informationen aus dem einen Schleppenspeicher (34) eine Umadressierung der Speicherzellen im x,y-Koordinatensystem in der Weise durchgeführt wird, daß eine Eigenschiffbewegung kompensiert wird, und daß wahlweise der Speicherinhalt des einen oder anderen Schleppenspeichers (26, 34) in den Bildwiederholspeicher (27) eingeschrieben wird.

7. Vorrichtung zur Erzeugung einer Nachleuchtschleppe zu mindestens einem in einem Radarbild (15) eines Radargerätes fortlaufend in seiner jeweils aktuellen Position dargestellten Ziel (21 bis 23), wobei die Vorrichtung einen Radarvideospeicher (25), mindestens einen Schleppenspeicher (26) und einen Bildwiederholspeicher (27) aufweist, die alle in x,y-Koordinaten orientiert sind und im x,y-Koordinatenbereich gleiche Speichergröße aufweisen, zwei eingangsseitig an dem Speicherausgang des Radarvideospeichers (25) angeschlossene Komparatoren (29, 30), eine Steuereinheit (28) zum Steuern der Speicher (25, 26, 27) und dadurch, daß in dem mit einer Empfangseinrichtung (11) des Radargeräts verbundenen Radarvideospeicher (25) die Amplituden der von der Empfangseinrichtung (11) aufbereiteten Radarechos abgespeichert sind und der Speicherinhalt fortlaufend aktualisiert wird, daß der erste Komparator (29) mit seinem Ausgang an dem Speichereingang des mit seinem Speicherausgang mit dem Speichereingang des Bildwiederholspeichers (27) verbundenen Schleppenspeichers (26) angeschlossen ist und bei jedem eine erste Komparatorschwelle (32) übersteigenden Eingangswert eine 1-Bit-Information an seinen Ausgang legt, dadurch gekenzeichnet, daß der zweite Komparator (30) mit seinem Ausgang an dem Speichereingang des Bildwiederholspeichers (27) angeschlossen ist und bei jedem eine zweite Komparatorschwelle (33) übersteigenden Eingangswert diesen Eingangswert auf seinen Ausgang durchschaltet und daß die Steuereinheit (28) den Speicherinhalt des mindestens einen Schleppenspeichers (26) mit einem Bildungsausdünnungsverfahren, z.B. einem pseudostatistischen Verfahren, fortlaufend löscht und das Ein- und Auslesen der Speicher (25, 26, 27) so steuert, daß zuerst der Speicherinhalt des Schleppenspeichers (26) und dann folgend der Speicherinhalt des Radarvideospeichers (25) in den Bildwiederholspeicher (27) eingelesen wird.

8. Vorrichtung nach Anspruch 7, **dadurch gekennzeichnet, daß** zwei Schleppenspeicher (36) mit ihrem Speichereingang an dem Ausgang des ersten Komparators (29) angeschlossen sind, daß die Steuereinheit (28) den Einschreibvorgang der am Ausgang des ersten Komparators (29) anstehenden 1 Bit-Informationen in den einen Schleppenspeicher (36) oder den Auslesevorgang der abgespeicherten 1 Bit-Informationen aus dem einen Schleppenspeicher (34) so steuert, daß eine die Eigenschiffbewegung kompensierende Umadressierung der Speicherzellen im x,y-Koordinatensystem vorgenommen ist, und daß der Speichereingang des Bildwiederholspeichers (27) auf einen der beiden Schleppenspeicher (26, 34) auf schaltbar ist.

9. Vorrichtung nach Anspruch 8, **dadurch gekennzeichnet, daß** die Aufschaltung des Bildwiederholspeichers (27) auf die Schleppensepicher (26, 34) manuell auslösbar ist.

## Claims

1. Method for producing a persistence trail for at least one target (21 to 23) whose respective current position is represented in a continuous manner in a radar image (15) of a radar instrument, in which the current target position is made visible by a number of pixels covering a contiguous area in the radar image (15) and the chronologically preceding target positions are represented by a thinning out of pixels in the area, said thinning out increasing with the chronological status of the respective target position, in which the amplitudes of the radar echoes received by the radar instrument are stored in a radar video memory (25), whose memory cells are oriented in x,y coordinates, and in which the memory content of the radar video memory (25) is written as 1-bit information memory cell by memory cell to at least one trail memory (26), whose memory cells are oriented in x,y coordinates, **characterized in that** in so far as the memory content of the individual memory cells exceeds a first predetermined value, the memory content of the trail memory (26) is continuously erased by a method for thinning out pixels, e.g. a pseudo-random method, **in that**, in a chronologically successive manner, first the memory content of the trail memory (26) is written to an image buffer memory (27), whose memory cells are oriented in x,y coordinates, and then the memory content of the radar video memory (25) is written to the extent that the memory contents of the individual memory cells of the radar video memory (25) exceed a second predetermined value, and **in that** the memory content of the image buffer memory (27) is represented in a continuous manner on the radar image (15) - oriented in x,y coordinates - as a pixel per memory cell.

2. Method according to Claim 1, **characterized in that** the second predetermined value is set to zero.

3. Method according to Claim 1 or 2, **characterized in that** the erasure method in the trail memory (26) is carried out with a frequency that is independent of the read-in/out frequency of the trail memory (26).

4. Method according to one of Claims 1-3, **characterized in that** the 1-bit information items are coded, at the latest during the process of writing to the image buffer memory (27), in such a way that their coding differs significantly from the coding of the memory content of the radar video memory (25).

5. Method according to Claim 4, **characterized in that** the coding is carried out during the process of writing to the trail memory (26).

6. Method according to one of Claims 1-5, **characterized in that** the 1-bit information items are written simultaneously to two trail memories (26, 34), **in that**, when the 1-bit information items are written to one trail memory (34) or when the 1-bit information items are read from one trail memory (34), readdressing of the memory cells in the x,y coordinate system is carried out in such a way that movement of one's own ship is compensated, and **in that** the memory content of one or the other trail memory (26, 34) is optionally written to the image buffer memory (27).

7. Apparatus for producing a persistence trail for at least one target (21 to 23) whose respective current position is represented in a continuous manner in a radar image (15) of a radar instrument, the apparatus having a radar video memory (25), at least one trail memory (26) and an image buffer memory (27), which are all oriented in x,y coordinates and have the same memory size in the x,y coordinate range, two comparators (29, 30) connected, on the input side, to the memory output of the radar video memory (25), a control unit (28) for controlling the memories (25, 26, 27), and in that, in the radar video memory (25) connected to a receiving device (11) of the radar instrument, the amplitudes of the radar echoes conditioned by the receiving device (11) are stored and the memory content is continuously updated, in that the output of the first comparator (29) is connected to the memory input of the trail memory (26), whose memory output is connected to the memory input of the image buffer memory (27), and said first comparator puts a 1-bit information item at its output in the case of each input value exceeding a first comparator threshold (32), **characterized in that** the output of the second comparator (30) is connected to the memory input of the image buffer memory (27) and, in the case of each input value exceeding a second comparator threshold (33), said second comparator switches through said input value to its output, and **in that** the control unit (28) continuously erases the memory content of the at least one trail memory (26) by a method for thinning out pixels, e.g. a pseudo-random method, and controls the read-in and read-out processes of the memories (25, 26, 27) in such a way that first the memory content of the trail memory (26) and afterward the memory content of the radar video memory (25) are read into the image buffer memory (27).

8. Apparatus according to Claim 7, **characterized in that** two trail memories (36) are connected to the output of the first comparator (29) by their memory input, **in that** the control unit (28) controls the operation of writing the 1-bit information items present at the output of the first comparator (29) to one trail memory (36) or the operation of reading the stored 1-bit information items from one trail memory (34) in such a way that readdressing of the memory cells in the x,y coordinate system is performed, said readdressing compensating the movement of one's own ship, and **in that** the memory input of the image buffer memory (27) can be connected to one of the two trail memories (26, 34).

9. Apparatus according to Claim 8, **characterized in that** the connection of the image buffer memory (27) to the trail memories (26, 34) can be initiated manually.

## Revendications

1. Procédé pour créer une traînée lumineuse d'au moins une cible (21 à 23) représentée en permanence dans chacune de ses positions instantanées sur l'image radar (15) d'un appareil radar, dans lequel la position instantanée de la cible est rendue visible par un certain nombre de points d'image qui couvrent une surface continue de l'image radar (15), les positions précédentes de la cible étant représentées dans la surface par un rétrécissement croissant des points d'image qui correspond à la succession dans le temps des positions instantanées de la cible, dans lequel les amplitudes des échos radar reçus par l'appareil radar sont conservées dans une mémoire vidéo radar (25) dont les cellules de mémoire sont orientées selon des coordonnées x, y et dans lequel le contenu de la mémoire vidéo radar (25) est écrit cellule de mémoire par cellule de mémoire dans au moins une mémoire de traînée (26) dont les cellules sont orientées suivant des coordonnées x, y sous la forme d'informations à 1 bit, **caractérisé en ce que** si le contenu des cellules individuelles de mémoire dépasse une première valeur prédéterminée, le contenu de la mémoire de traînée (26) est effacé en permanence par un procédé de rétrécissement des points d'image, par exemple un procédé pseudo-statistique, **en ce que** dans une mémoire (27) de répétition d'image dont les cellules sont orientées suivant des coordonnées x, y, le contenu de la mémoire de traînée (26) est écrit en premier lieu et successivement, le contenu de la mémoire vidéo radar (25) étant écrit dans la mesure où le contenu des cellules individuelles de la mémoire vidéo radar (25) dépasse une deuxième valeur prédéterminée, et **en ce que** le contenu de la mémoire (27) de répétition d'image est représenté en permanence dans l'image radar (15) orientée suivant les coordonnées x, y sous la forme d'un point d'image par cellule de mémoire.

2. Procédé selon la revendication 1, **caractérisé en ce que** la deuxième valeur prédéterminée est fixée à zéro.

3. Procédé selon les revendications 1 ou 2, **caractérisé en ce que** le procédé d'effacement de la mémoire de traînée (26) est exécuté à une fréquence qui est indépendante de la fréquence d'écriture/lecture de la mémoire de traînée (26).

4. Procédé selon l'une des revendications 1 à 3, **caractérisé en ce que** les informations à 1 bit sont codées au plus tard lors de l'écriture dans la mémoire (27) de répétition d'image, de telle sorte que leur codage se distingue de manière significative du codage du contenu de la mémoire vidéo radar (25).

5. Procédé selon la revendication 4, **caractérisé en ce que** le codage est réalisé lors de l'écriture dans la mémoire de traînée (26).

6. Procédé selon l'une des revendications 1 à 5, **caractérisé en ce que** l'écriture des informations à 1 bit s'effectue simultanément dans deux mémoires de traînée (26, 34), **en ce que** lors de l'écriture des informations à 1 bit dans l'une (34) des mémoires de traînée ou lors de la lecture des informations à 1 bit dans l'une (34) des mémoires de traînée, on réalise un réadressage des cellules de mémoire dans le système de coordonnées x, y de manière à compenser un déplacement propre du navire et **en ce que** le contenu de l'une ou de l'autre mémoire de traînée (26, 34) est inscrit sélectivement dans la mémoire (27) de répétition d'image.

7. Dispositif en vue de la création d'une traînée lumineuse d'au moins une cible (21 à 23) représentée dans chacune de ses positions instantanées dans une image radar (15) d'un appareil radar, le dispositif présentant une mémoire vidéo radar (25), au moins une mémoire de traînée (26) et une mémoire de répétition d'image (27) qui sont toutes orientées suivant des coordonnées x, y et qui présentent la même taille dans la plage des coordonnées x, y, deux comparateurs (29, 30) raccordés du côté de leur entrée à la sortie de la mémoire vidéo radar (25), une unité de commande (28) pour commander les mémoires (25, 26, 27), les amplitudes des échos radar préparés par le dispositif de réception (11) étant conservées dans la mémoire vidéo radar (25) reliée à un dispositif de réception (11) de l'appareil radar, le contenu de la mémoire étant actualisé en permanence, le premier comparateur (29) étant relié par sa sortie à l'entrée de la mémoire de traînée (26) reliée par sa sortie à l'entrée de la mémoire (27) de répétition d'image, une information à 1 bit étant appliquée à sa sortie au cas où la valeur d'entrée dépasse un premier seuil (32) du comparateur, **caractérisé en ce que** le deuxième comparateur (30) est relié par sa sortie à l'entrée de la mémoire (27) de répétition d'image, **en ce que** lorsque la valeur d'entrée dépasse un deuxième seuil (33) du comparateur, il fait passer cette valeur d'entrée par sa sortie, et **en ce que** l'unité de commande (28) efface en permanence le contenu de la ou des mémoires de traînée (26) par un procédé de rétrécissement d'image, par exemple un procédé pseudo-statistique, et commande l'écriture et la lecture dans les mémoires (25, 26, 27) de telle sorte que le contenu de la mémoire de traînée (26) est écrit en premier lieu et qu'ensuite le contenu de la mémoire vidéo radar (25) est écrit dans la mémoire (27) de répétition d'image.

8. Dispositif selon la revendication 7, **caractérisé en ce que** deux mémoires de traînée (36) sont reliées par leur entrée à la sortie du premier comparateur (29), **en ce que** l'unité de commande (28) commande l'opération d'écriture des informations à 1 bit appliquées à la sortie du premier comparateur (29) dans l'une des mémoires de traînée (36) ou l'opération de lecture des informations à 1 bit conservées dans l'une des mémoires de traînée (34) de telle sorte qu'un réadressage de compensation des déplacements propres du navire des cellules de mémoire dans le système de coordonnées x, y est réalisé et **en ce que** l'entrée de la mémoire (27) de répétition d'image peut être commutée sur l'une des deux mémoires de traînée (26, 34).

9. Dispositif selon la revendication 8, **caractérisé en ce que** la commutation entre la mémoire (27) de répétition d'image et la mémoire de traînée (26, 34) peut être déclenchée manuellement.
